(19) Europäisches Patentamt
European Patent Office
Office européen des brevets

(11) EP 0 496 402 B1

(12) EUROPEAN PATENT SPECIFICATION

(45) Date of publication and mention
of the grant of the patent:
**14.04.1999 Bulletin 1999/15**

(51) Int Cl.$^6$: **G02B 6/28**

(21) Application number: **92101093.0**

(22) Date of filing: **23.01.1992**

(54) **Clamp for use in optical fiber coupler manufacturing apparatus**

Klemmvorrichtung zur Verwendung in einer Apparatur zur Herstellung von optischen Faserkopplern

Crampon pour l'utilisation dans un dispositif de fabrication de coupleur fibre optique

(84) Designated Contracting States:
**DE ES FR GB IT NL**

(30) Priority: **25.01.1991 JP 23850/91**
**02.02.1991 JP 33599/91**
**06.03.1991 JP 65514/91**

(43) Date of publication of application:
**29.07.1992 Bulletin 1992/31**

(73) Proprietors:
- **SUMITOMO ELECTRIC INDUSTRIES, LTD**
  **Osaka-shi, Osaka-fu 541 (JP)**
- **SUMIDEN OPCOM, LTD.**
  **Ota-ku, Tokyo (JP)**

(72) Inventors:
- **Takimoto, Hiroaki, c/o Yokohama Works of**
  **Sakae-ku, Yokohama-shi, Kanagawa (JP)**
- **Suganuma, Hiroshi, c/o Yokohama Works of**
  **Sakae-ku, Yokohama-shi, Kanagawa (JP)**
- **Yoshikawa, Junichi, c/o Yokohama Works of**
  **Sakae-ku, Yokohama-shi, Kanagawa (JP)**
- **Arimoto, Kazuhiko**
  **Ota-ku, Tokyo (JP)**

(74) Representative: **Grünecker, Kinkeldey,**
**Stockmair & Schwanhäusser Anwaltssozietät**
**Maximilianstrasse 58**
**80538 München (DE)**

(56) References cited:
EP-A- 0 047 691          EP-A- 0 176 623
EP-A- 0 370 465          JP-A- 1 080 913
JP-A- 1 094 904          US-A- 4 727 742

- PATENT ABSTRACTS OF JAPAN vol. 1, no. 77 (E-77)22 June 1977 & JP-A-52 014 430 ( NIPPON DENSHIN DENWA KOSHA )
- PATENT ABSTRACTS OF JAPAN vol. 14, no. 508 (P-1128)7 November 1990 & JP-A-2 211 409 ( FUJIKURA )
- PATENT ABSTRACTS OF JAPAN vol. 14, no. 345 (P-1083)26 July 1990 & JP-A-2 123 308 ( FUJIKURA ) 10 May 1990

## Description

### BACKGROUND OF THE INVENTION

(Field of the Invention)

The present invention relates to an apparatus for clamping optical fibers with which optical fiber couplers for communication systems and sensor systems are manufactured.

(Prior Art)

In configuring an optical communication system and an optical data link network, an important component is an optical splitter that distributes an optical signal from a light source with a desired ratio. One such optical splitter is an optical fiber coupler which is usually constructed with a plurality of fibers melted together by heating and then drawn under a predetermined tensile force. While melting together, the glass portions of the optical fibers must be placed together in parallel for positioning by using a clamp assembly. The accuracy in positioning of the clamp assembly greatly influences the characteristics of the manufactured optical fiber coupler.

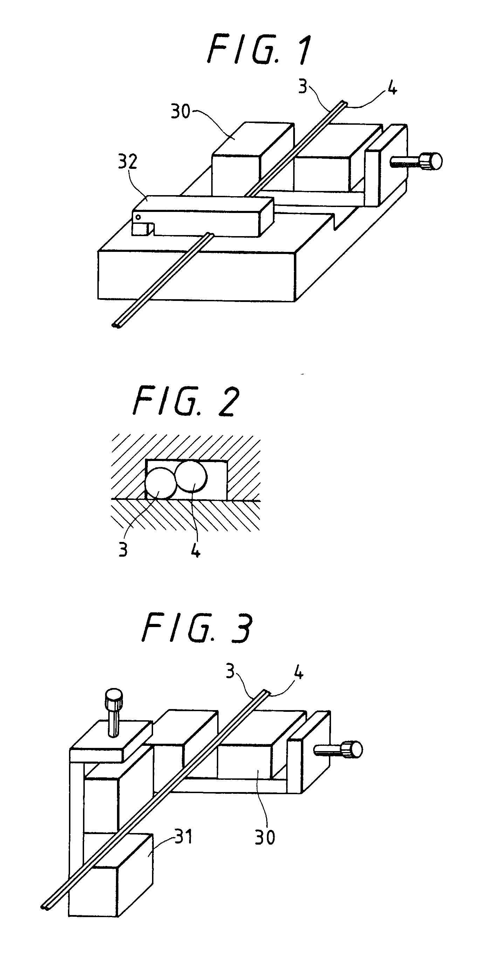

Conventional clamp assemblies, as disclosed in Japanese Patent Preliminary Publication No. 63-118705, hold the optical fibers in two directions. Fig. 1 is a perspective view of a clamp assembly described in the aforementioned JP No. 63-118705. Two optical fibers 3 and 4 are held by a clamp 32 in a vertical direction and the aligned fibers are then held by a horizontal position adjusting clamp 30 in a horizontal direction for positioning.

The above-described conventional clamps hold the fibers at axially spaced two positions in two directions transverse to each other. Thus, there is the possibility of clamping the fibers in a twisted form. If the slot of clamp 32 is deeper than the diameters of optical fibers 3 and 4, the fibers are not placed in position within the slot as shown in Fig. 2, making it difficult to align the fibers side-by-side horizontally.

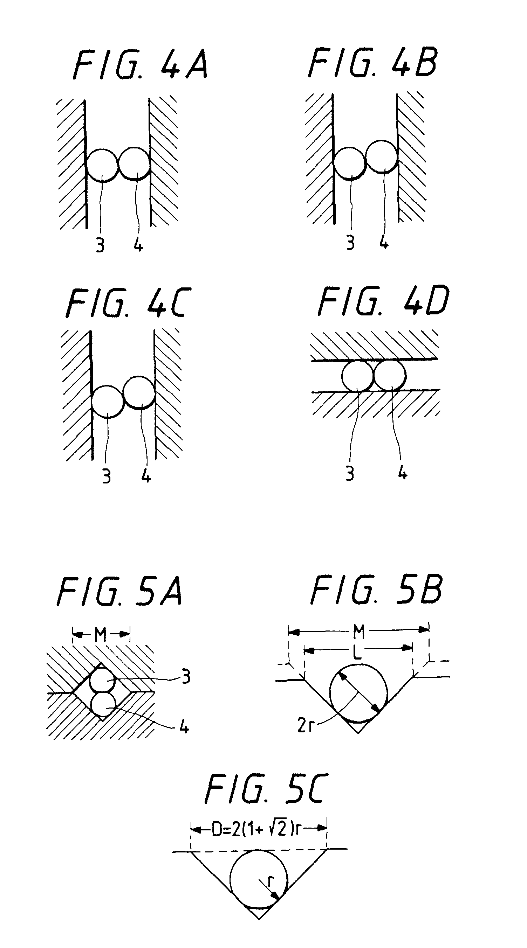

As shown in Fig. 3, two position adjusting devices or clamps, i.e., a horizontal position adjusting device 30 and a vertical position adjusting device 31, may be combined to form a clamp assembly, whereby one of the devices tends to clamp the fibers 3 and 4 before the other device clamps the fibers. If the horizontal position adjusting device 30 first clamps the fibers, there is the possibility that the fibers will be more likely positioned as shown in Fig. 4B than as shown in Fig. 4A.

Then, the vertical position adjusting device 31 clamps the fibers with the result that the fibers clamped by the device 30 are like that in Fig. 4C while the fibers clamped by the device 31 are like that in Fig. 4D. The two optical fibers/continue to be improperly axially positioned. Even if the vertical position adjusting device 31 first clamps the fibers, the result is the same.

Thus, it is difficult to have the optical fibers clamped properly by using the conventional way of clamping where fibers are clamped at two axially spaced positions in transverse direction to each other.

Meanwhile, Japanese Utility model Preliminary Publication No. 1-94904 discloses an optical fiber fixing assembly which uses a pair of optical fiber sandwiching devices having a thickness and a level difference smaller than the diameter of the optical fibers and greater than the radius. However, the fiber fixing assembly is not easy to use.

Japanese Patent Preliminary Publication No. 64-80913 discloses an optical fiber fixing device where each of two fibers is received in the V-shaped slot of each of two halves of a block, and the two halves are put together such that the two fibers are pressed against each other from two sides for closely sandwiched condition.

The depth of the V-shaped slot cannot be made greater than the two optical fibers 3 and 4 being just in contact with each other when the two halves of block are put together as shown in Fig. 5A.

With the fibers sandwiched by the blocks as in Fig. 5A, if the V-shaped slot has an angle of 90 degrees as shown in Fig. 5B, then the width M of the opening of the V shape is given by

$$M = 2(1+2^{\frac{1}{2}})r$$

where $r$ is the radius of optical fibers.

Thus, a possible maximum width D of the opening of V-shaped slot shown in Fig. 5C is M as shown in Fig. 5B wherein D is defined by $2(1 + 2\sqrt{2})r$. If the diameter 2r of the optical fiber is 125 μm, then M is approximately 600 μm.

Thus, as a practical matter, the opening width D of the V-shaped slot is in the range of 200 to 300 μm, which is very small. Therefore, the operation of inserting an optical fiber into the V-shaped slot must be performed with a microscope.

Since the two optical fibers tend to curl, it is quite rare that the two optical fibers are perfectly parallel in the V-shaped slot. The fibers are usually not in parallel. The device disclosed by Japanese Patent Preliminary Publication No. 64-80913 requires a check to ensure that the optical fibers are completely inserted into the V-shaped slot. This operation is carried out with a microscope, which causes fatigue of operators's eyes.

Document JP-22 11 409 discloses an apparatus for clamping a plurality of optical fibers wherein the optical fibers are inserted into V-shaped grooves of holding blocks in fixation bodies. The fixation bodies are disposed separately adjacent to the region where the optical fibers are to be fused and coupled. The fixation bodies are operated independently.

Document EP-A-0 047 691 describes a device for spreading out fibers of an optical cable in a flat manner wherein the fibers are guided by pushing means into compartments comprising a wider guiding opening and being terminated by a narrow slot.

It is known from document EP-A-0 176 623 to arrange a plurality of optical fibers in a device comprising two holding parts being provided with a L-shaped profile. Both holding parts form a compartment accommodating the optical fibers.

Document US-A-4 727 742 discloses a crimping apparatus for butt splicing two optical fibers wherein the fibers to be connected are arranged in a holding member comprising a positioning groove with an upper wider guiding opening and a lower narrow slot.

## SUMMARY OF THE INVENTION

The object of the present invention is to provide an apparatus for clamping a plurality of optical fibers being capable of overcoming the drawbacks of the above-discussed clamping devices, said apparatus being easy to use and allowing the simple parallel holding of the optical fibers. A further object of the invention is to provide a method for operating such an improved apparatus for clamping optical fibers.

These objects are solved by the apparatus and the method of claims 1 and 11 respectively. Advantageous embodiments of the invention are defined in the dependent claims.

A clamp according to an embodiment of the present invention is a clamp for manufacturing optical fiber couplers, used in an optical fiber coupler manufacturing apparatus in which the glass portions of a plurality of optical fibers are fused, heated, and drawn, wherein said clamp has a slotted member having a slot into which optical fibers are inserted and an opening outwardly widening said slot such that the optical fibers are guided into the slot; and a pushing member movably disposed adjacent to said slot such that the pushing member pushes said optical fibers through said opening into said slot; wherein said slotted member is away from said pushing member when fibers are not clamped, and said slotted member is fixed in position where the slotted member clamps the fibers.

Further, a clamp for optical fibers manufacturing apparatus according to an embodiment of the invention is provided with two pairs of clamps, each of which including: a slotted member having a slot into which optical fibers are inserted; and a pushing member movably disposed such that said pushing member pushes said optical fibers into said slot of said slotted member; wherein each of pushing members is provided with urging means for imposing a pressing force toward said slot on said pushing member.

Also, a clamp according to an embodiment of the invention inserts the optical fibers into the slot and clamps them in the following manner.

With the slotted member and the pushing member spaced from each other, optical fibers are positioned at the optical-clamp feeding portion of the slotted member and then the pushing member is moved so as to push the optical fiber into the slot through the optical-clamp feeding portion.

The pushing member and/or the slotted member may be supported by air floating bearings such that the pushing member and/or slotted member may be moved with only a small frictional force involved. Shutting off the air supplied to the air floating bearings permits the pushing member and/or the slotted member to be in position.

Further, a clamp according to an embodiment of the invention inserts the optical fibers into the slot and clamps them in the following manner.

With the slotted member 1 and the pushing member 2 spaced from each other, optical fibers are positioned at the slot of the slotted member and then the pushing member 2 is moved so as to push the optical fiber into the slot.

The pushing members 2 are each urged by, for example, a spring 2b, so that pushing members have a proper pressing force at a proper position against the respective slotted member 1 for ensuring the optical fibers to properly be aligned.

## BRIEF DESCRIPTION OF THE DRAWINGS

Fig. 1 is a perspective view of a conventional clamping apparatus;

Fig. 2 is an illustrative diagram of the operation of the clamp in Fig. 1 ;

Fig. 3 is a perspective view of another conventional clamp apparatus ;

Figs. 4A to 4D are illustrative diagrams of the operation of the clamp in Fig. 3 ;

Figs. 5A to 5C are illustrative diagrams of a conventional clamping apparatus;

Fig. 6 shows a general construction of an embodiment of an optical fiber coupler manufacturing apparatus according to the invention;

Figs. 7A to 7C are illustrative diagrams of an embodiment of a clamp for optical fibers according to the invention, respectively;

Figs. 8A to 8E show the operation of the clamp in Figs. 7A to 7C, respectively;

Fig. 9A and 9B show the procedure of clamping two optical fibers with an optical fiber coupler manufacturing apparatus, respectively;

Figs. 10A and 10B show relative position of the glass portions of optical fibers, respectively;

Fig. 11 shows an embodiment of a drive mechanism of a clamp for optical fibers according to the invention;

Figs. 12A and 12B show another embodiment of a clamp drive mechanism for optical fiber clamp according to the invention, respectively;

Fig. 13 shows an example of an air slider;

Fig. 14 shows an embodiment of an optical fiber clamp according to the invention;

Fig. 15 shows a general construction of an optical fiber coupler manufacturing apparatus of another basic embodiment invention;

Figs. 16A and 16B show the fibers clamped by the clamp members of the invention;

Fig. 17 shows another embodiment of a drive mechanism of a clamp for optical fibers according to the invention;

Fig. 18 shows another embodiment of a drive mechanism of a clamp for optical fibers according to the invention;

Fig. 19 shpws still another embodiment of an optical fiber clamp mechanism according to the invention;

Figs. 20A and 20B show an embodiment where a weight is used for a clamp mechanism;

Fig. 21 shows a general construction of an optical fiber coupler manufacturing apparatus of a further basic embodiment ;

Figs. 22A to 22D are illustrative diagrams of an embodiment of a clamp for the optical fiber coupler manufacturing apparatus shown in Fig. 21 ;

Figs. 23A to 23E show the operation of the clamp in Fig. 22 ;

Figs. 24A to 24C are illustrative diagrams of another embodiment of a clamp for an optical fiber coupler manufacturing apparatus ;

Figs. 25A and 25B are illustrative diagrams of an embodiment of a clamp for an optical fiber coupler manufacturing apparatus ;

Figs. 26A and 26B are top views of an example of an arrangement of a clamp according to Figs. 22 and 24 ;

Figs. 27A and 27B are top views of another example of an arrangement of a clamp according to Figs. 22 and 24 ;

Figs. 28A and 28B are top views of another example of an arrangement of a clamp according to Figs. 22 and 24 ;

Figs. 29A and 29B are illustrative diagrams showing positional relation of the glass portions of optical fibers;

Fig. 30 is an illustrative diagram of an embodiment of a drive mechanism of a clamp for the optical fiber coupler manufacturing apparatus according to Figs. 22 and 24 ;

Fig. 31 is an illustrative diagram of an embodiment of a drive mechanism of a clamp for the optical fiber coupler manufacturing apparatus according to Figs. 22 and 24 ;

Fig. 32 is an illustrative diagram of an embodiment of a drive mechanism of a clamp for the optical fiber coupler manufacturing apparatus according to Figs. 22 and 24 ; and

Fig. 33 is an illustrative diagram of an embodiment of a drive mechanism of a clamp for an optical fiber coupler manufacturing apparatus according to Figs. 22 and 24.

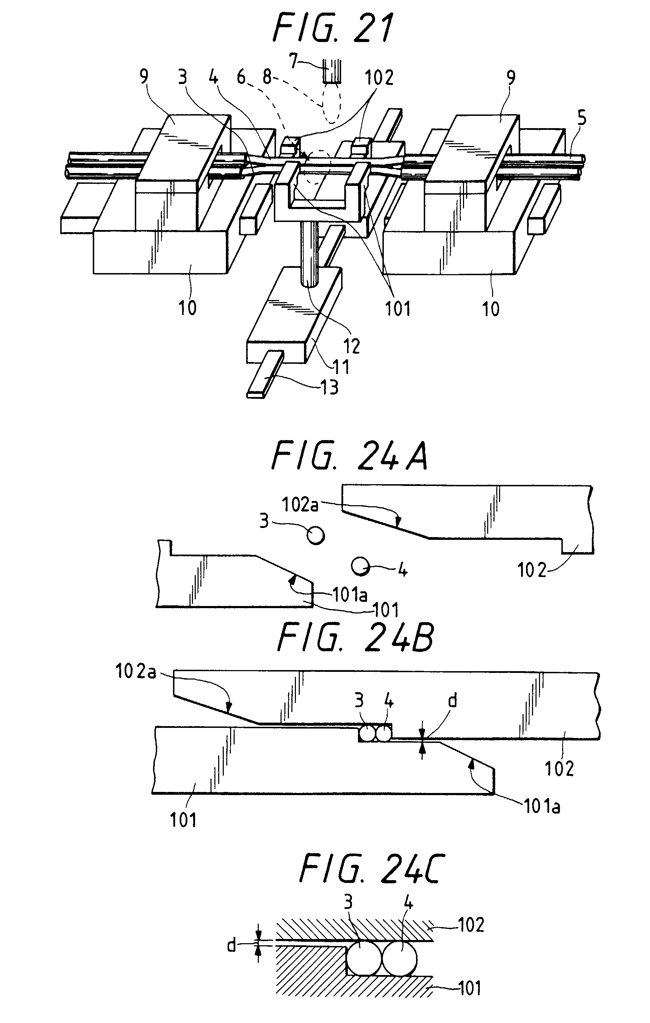

The embodiments shown in Figs. 21 to 33 of the drawings are given to help in the understanding of the invention.

DETAILED DESCRIPTION OF THE PREFERRED EMBODIMENTS

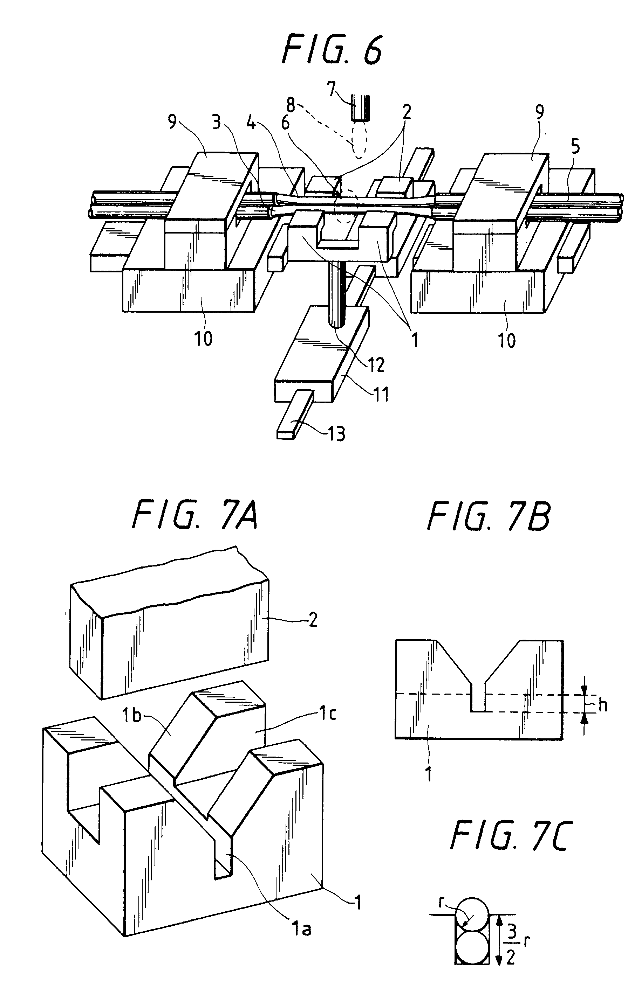

Fig. 6 is a general perspective view of an optical fiber coupler manufacturing apparatus showing one basic embodiment of the invention. In the figure, reference numeral 1 denotes two longitudinally spaced slotted members, 2 two longitudinally spaced pushing members disposed in front of the corresponding slotted members 1, 3 and 4 glass portions of optical fibers, 5 coated portions of optical fibers, 6 a heat-fused connected portion, 7 a burner, 8 a flame, 9 two side clamps for the coated fibers each side of the heat-fused connected portion, 10 two drawing stages, 11 a slider, 12 a stand, and 13 a guide shaft. The slider 11 and the guide shaft 13 form a linear bearing.

The two longitudinally spaced by slotted members 1 and their corresponding pushing members 2 form a pair of longitudinally spaced central clamps which have each a longitudinal slot in which the later described glass portions 3 and 4 (two fibers are shown in the figure) of optical fibers with stripped off coatings are disposed. The optical fibers are fixed at the glass portions thereof by the two central clamps and are then further clamped at their outer coating by the two side clamps 9. Each side clamp 9 is placed on a drawing stage 10 on which the optical fibers are drawn in the axial direction, and clamps the two fibers at their coatings 5 laterally. The optical fibers are aligned in parallel by the slotted members 1 and the pushing members 2, and are heated at a middle portion of the glass portions between the two central clamps, i.e., at the heat-fused connected portion 6, over the flame 8 of the burner 7 for fusing.

Then, the slotted member 1 and the pushing member 2 of each central clamp move away from each other. Then, while being heated by the flame 8, to the heat-fused connected portion 6 is applied a tensile force by each drawing stage 10 which carries thereon a corresponding side clamp 9 that clamps the optical fiber coating 5. The heat-fused connection 6 is drawn by the tensile force and the drawing operation is stopped when a desired split ratio is achieved. In this manner, an optical fiber coupler is manufactures.

Figs. 7A, 7B and 7C are illustrative perspective views of an embodiment of a central clamp 1,2 for optical fibers according to the invention, respectively. In the figures, reference numeral 1 is a slotted member, 1a a longitudinal slot, 1b an optical-fiber feeding portion, and 1c a transverse slot into which the corresponding pushing members is inserted. As shown in a perspective view of Fig. 7A, this clamp is so constructed that the pushing member 2 presses the optical fibers inserted into the slot 1a of the slotted member 1 to clamp them. The pushing member 2 has a width such that it can be inserted into the transverse slot 1c of the slotted member 1.

The optical fibers are inserted one upon the other into the longitudinal slot 1a of the slotted member 1, and the optical fibers are then pressed by the pushing member 2. Accordingly, the height of slot 1a must be approximately 1.5 times greater that the diameter of the optical fibers as shown in Fig. 7C. In the case where the bottom of slot 1c is lower than that of slot 1a, even if the height of slot 1a is greater than 1.5 times the diameter of optical fibers, there is no problem because the optical fibers are fully inserted into slot 1a. On the contrary, in the case where the bottom of slot 1c is higher than that of the slot 1a as shown in Fig. 7B, the difference $\underline{h}$ between the bottom of slot 1a and the bottom of slot 1c must be approximately 1.5 times the diameter of optical fibers. In this case, the slot 1a is extended to the bottom of slot 1c. If the bottom of slot 1c is higher than that of slot 1a, this is advantageous as the force exerted on the optical fibers by the pushing member 2 is uniformly distributed to the optical fibers.

If the optical fibers have a diameter of 125 µm, then the width of the longitudinal slot 19 may be selected to be approximately 130 µm, somewhat greater than the diameter of fiber. Good accuracy of the diameter of optical fiber and good accuracy of machining the fibers provide a slot width close to 125 µm. The depth of slot 1a is given by 125 µm × 1.5 = 187.5 µm or more. Preferably, the depth of slot 1a has a value ranging from 187.5 to 200 µm.

However, it is also possible to make the depth of slot 1a greater than twice the diameter of optical fiber, i.e., greater than 250 µm. If the $\underline{h}$ described with reference to Fig. 7B is greater than 187.5 µm and less than 250 µm, then there will be no problem.

Figs. 8A to 8E show two optical fibers clamped by the central clamp 1,2 described by referring to Figs. 7A and 7B. In the figure, elements being similar to those in Figs. 7A and 7B have been given the same references and the description thereof is omitted. Reference numerals 3 and 4 are glass portions of optical fibers.

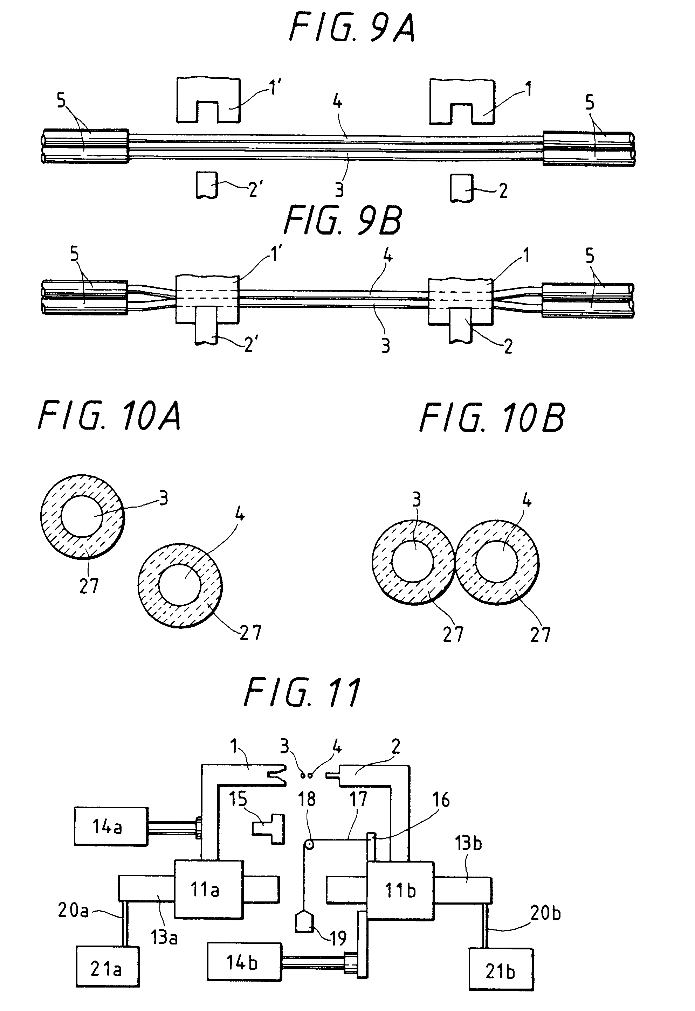

Ideally or theoretically, the glass portions 3 and 4 are supposed to be as shown in Fig 10B if the two optical fibers are properly aligned by the lateral clamps 9 described referring to Fig. 6. The optical fibers cannot be ideally put together by the side clamps 9 due to forces resulted from twisting and bending of the optical fibers themselves, the two optical fibers actually being away from each other and at irregular positions as shown in Fig. 10A.

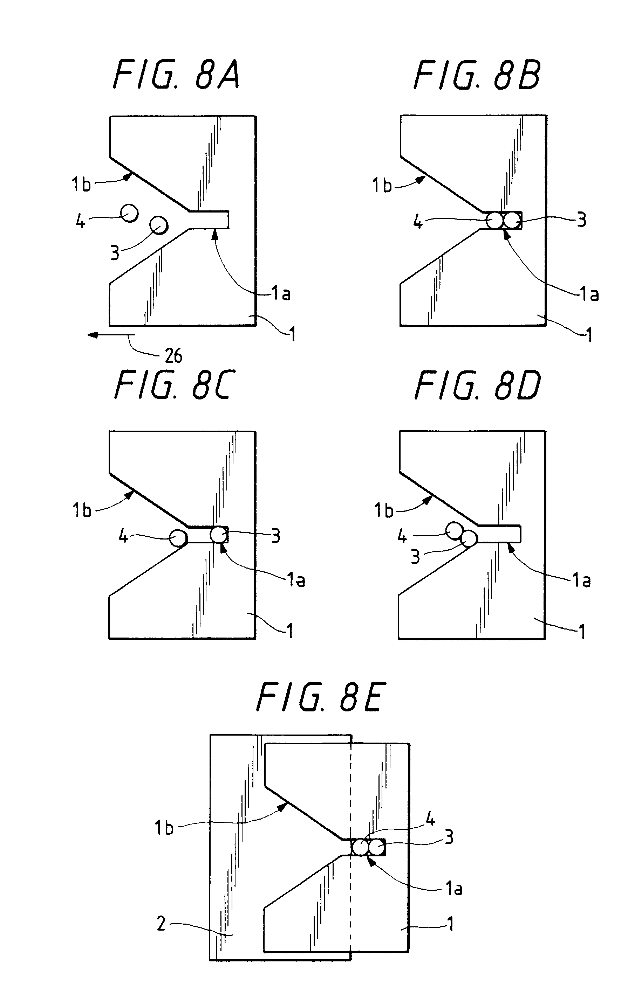

As shown in Fig. 8A, the slotted member 1 is moved relative to the glass portions 3 and 4 of optical fibers in a direction of an arrow 26. If the operation is successfully carried out, the glass portions 3 and 4 are received in the slot 1a as shown in Fig. 8B, but if not, one 4 of the glass portions will not go into the slot as shown in Fig. 8C or both of the glass portions may stay at the entrance of slot 1a as shown in Fig. 8D and will not go into the slot. In either case, the pushing member 2 pushes the glass portions of optical fibers as shown in Fig. 8E so as to completely align the two optical fibers.

Figs. 9A and 9B illustrate the process in which the two optical fibers are clamped by the optical fiber coupler manufacturing apparatus described with reference to Fig. 6. In Figs. 9A and 9B, references 1 and 1' are slotted members, 2 and 2' pushing members, 3 and 4 glass portions of optical fibers, and 5 and 5' coatings.

The slotted members 1 and 1' and pushing members 2 and 2' are disposed away from each other as shown in Fig. 9A before clamping. Before fusing process, the slotted members 1 and 1' and pushing members 2 and 2' move to clamp the glass portions 3 and 4 of optical fibers as described by referring to Figs. 8A to 8E. It is important that the two glass portions 3 and 4 are clamped symmetrically as shown in Fig. 9B. Accordingly, it is important that the slotted members 1 and 1' and the pushing members 2 and 2' push the glass portions 3 and 4 by a depth equal to the thickness of coatings of optical fibers. Care should be taken to properly position both the members and to apply a proper pressing force so that the fibers are properly pushed.

Fig. 11 is a diagram of an embodiment where a weight is used to drive each clamp, showing a general construction of a clamp mechanism of an optical fiber coupler manufacturing apparatus. In the figure, 1 is a slotted member, 2 a pushing member, 3 and 4 the glass portions of optical fibers, 11a and 11b sliders, 13a and 13b guide shafts, 14a and 14b air cylinders, 15 a stopper, 16 a post to which the end of a string is fixed, 17 a string, 18 a roller, 19 a weight, 20a and 20b air supplying tube, and 21a and 21b compressed air supplyers.

The sliders 11a and 11b take the form of a compressed air supplyer.

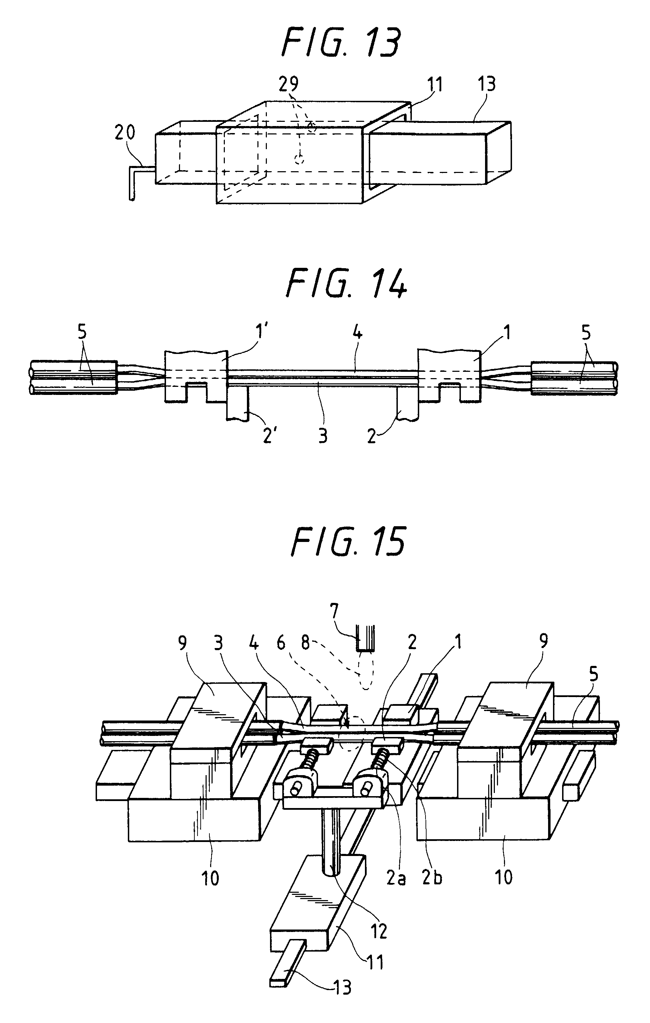

Fig. 13 shows one example of an air slider. A clearance is defined between the guide shaft 13 and the slider 11. Around the outer surface of shaft 13 are provided a plurality of jet holes 29 which communicate with the air supplying tube 20 mounted at one end of the guide shaft 13. When a compressed air is introduced from the air supplying tube into the guide shaft 13, the air pressure causes the slider 11 to float relative to the guide shaft 13. Being floated by air, the slider 11 is able to move with a very small friction so that the clamp mounted on the slider 11 can be moved by a small force.

The operation of the clamp mechanism in Fig. 11 will now be described. When the fibers are not being clamped, the slotted member 1 and the pushing member 2 are away from each other as shown, and the glass portions 3 and 4 of the optical fibers are set therebetween. The slotted member 1 is pushed by the air cylinder 14a so as to place the glass portions 3 and 4 in the slot. The slotted member 1 is controlled to stop at the stopper 15. The weight 19 exerts a force on the post 16 via the roller 18 and the string 17 to move the pushing member 2. Prior to the movement of the pushing member 2, the pressing force of the air cylinder 14b against the slider 11b is removed. The glass portions 3 and 4 of optical fibers are pushed, thanks to the weight 19, by the pushed member 2.

It is required of the pushing member 2 that it continues to push the optical fibers. When the pushing member 2 takes the form of an air slider, once the pushing member is in contact with the optical fibers, the pushing member 2 continues to push the optical fibers even after the air supply is stopped. This not only saves air but also imposes no problem even if the pushing member yaws.

When using a clamp according to the present invention, it is good practice to reduce the force for the pushing member to push the optical fibers so that damages to the optical fibers are prevented. From this point of view, the pushing member preferably takes the form of an air floating type bearing.

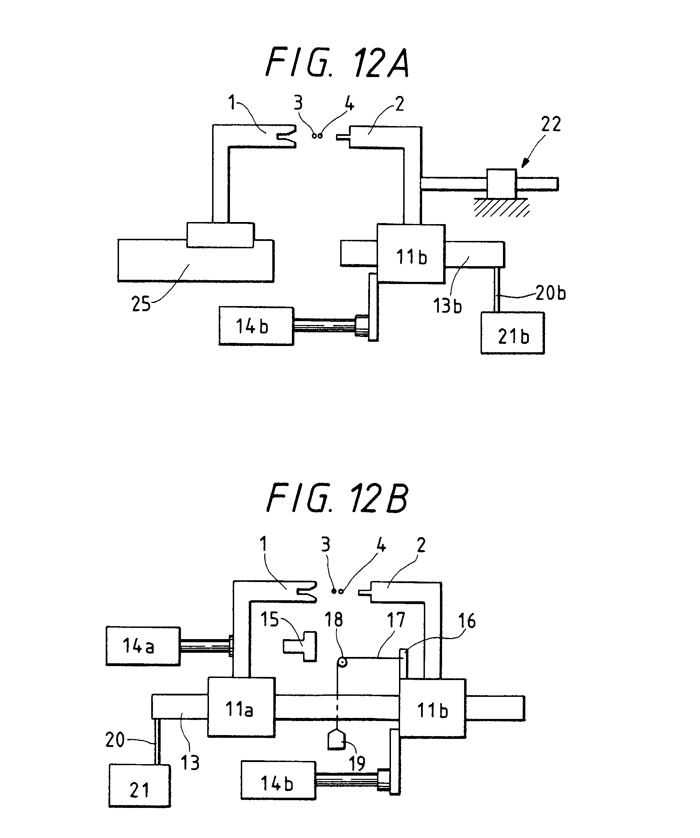

Fig. 12A shows a general construction of another embodiment of a clamp mechanism for an optical fiber coupler manufacturing apparatus.

In the figure, elements similar to those in Fig. 11 have the same references and their description has been omitted. Reference numeral 22 denotes a magnet mechanism, and 25 is an automatic stage. The slotted member 1 plays an important role in positioning. Thus, an automatic stage is used. The pushing member 2 may be driven by an electromagnet 22.

Fig. 12B shows a general construction of still another embodiment of a clamp mechanism for an optical fiber coupler manufacturing apparatus. In the figure, elements similar to those in Fig. 11 have been given the same references and their description has been omitted. In this embodiment, the two guide shafts 13a and 13b have been replaced by a common guide shaft 13. This facilitates the registration of the slotted member 1 relative to the pushing member 2.

The method of moving the clamp is not limited to the above-described embodiments. Known linear bearings may also be used. If the moving mechanisms have larger diameters, other bearings may be used in place of the linear bearings.

The slotted members 1 and 1' may be axially spaced from the pushing members 2 and 2' as shown in Fig. 14. In this case, larger shearing forces are exerted on the optical fibers so that the optical fibers tend to fracture. Thus, care should be exercised when applying a pressing force to the fibers.

Fig. 15 is a general perspective view of an optical fiber coupler manufacturing apparatus showing another basic embodiment of the invention. In the figure, elements similar to those in Fig. 6 have the same reference signs and their description has been omitted. The pushing member 2 is mounted at the tip end of a movable shaft 2a with some movement allowed and is urged by a spring 2b against the slotted member 1. A construction like a ball-and-socket joint may be used for mounting the pushing member 2 to the movable shaft 2a, so that the pushing member 2 may be freely positioned relative to the movable shaft 2a. The pushing member 2 may be loosely mounted to the movable shaft. The movable shaft 2a may be fixed to the pushing member and the movable shaft 2a may be mounted loosely and movably to the stand 12. A clamp constructed by the slotted member 1 and the pushing member 2 and its operation are the same as those used in the embodiment of Fig. 6, and therefore their description has been omitted.

The coatings 5 of two optical fibers 3 and 4 are fixed on each drawing stage 10 by a respective coating clamp 9. Then, the fibers are clamped by a clamp formed of the slotted member 1 and pushing member 2. The glass portions 3 and 4 of optical fibers in parallel are heated by the flame of the burner 7 so as to melt and fuse the fibers into the fusion 6.

Then, the slotted member 1 and the pushing member 2 move away from each other. Then, while being heated by the flame 8, to the heat-fusing connection 6 is applied a tensile force by the drawing stages 10 which carry the cover clamps 9 that clamp the optical fiber coatings 5. The heat-fusing connection 6 is drawn by the tensile force and the drawing operation is stopped when a desired split ratio is achieved. In this manner, an optical fiber coupler is manufactured.

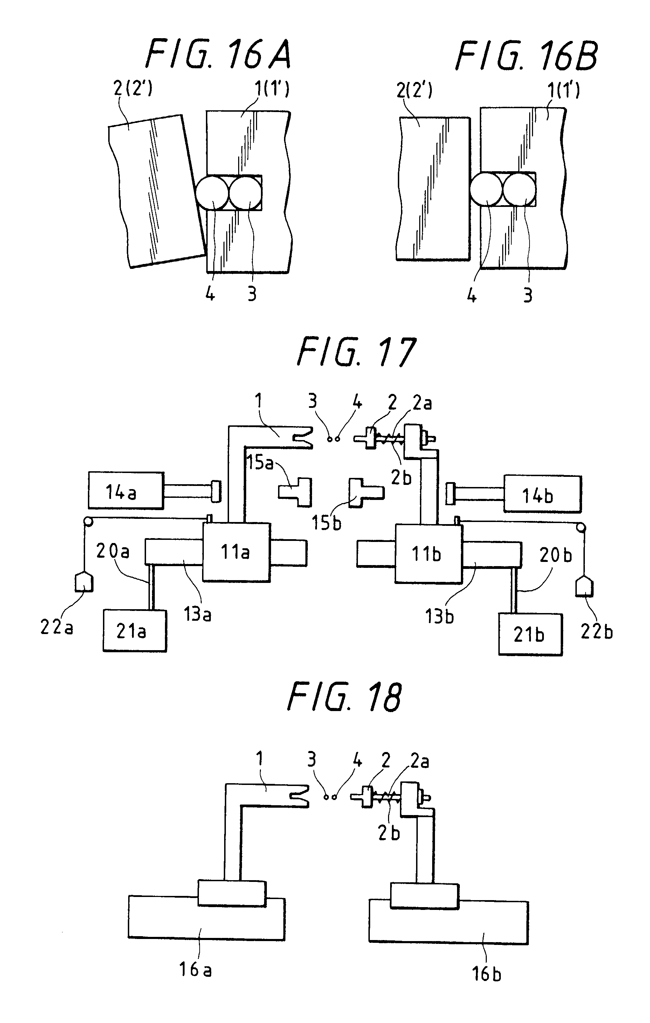

In this embodiment, when clamping, the each of pushing members 2 and 2' are urged by a spring. Both members 2 and 2' have some freedom at their distal end portions, so that even if the pushing members 2 and 2' are advanced somewhat obliquely relative to the slotted members 1 and 1' as shown in Fig. 16A, the distal end portions of the pushing members 2 and 2' are aligned with respect to the slot as shown in Fig. 16B to properly push the optical fibers 4.

Fig. 17 is a diagram of an embodiment showing a general construction of a clamp mechanism of an optical fiber coupler manufacturing apparatus. In the figure, reference 1 is a slotted member, 2 a pushing member, 3 and 4 the glass portions of optical fibers, 11a and 11b sliders, 13a and 13b guide shafts, 14a and 14b air cylinders, 15a and 15b stoppers, 20a and 20b air supplying tubes, 21a and 21b compressed air supplier, and 22a and 22b weights for urging the clamp in a direction as to open. The sliders 11a and 11b have the form of air sliders. One example of an air slider is shown in Fig. 13.

The operation of the clamp mechanism in Fig. 17 will now be described. When the fibers are not being clamped, the slotted member 1 and the pushing member 2 are away from each other as shown, and the glass positions 3 and 4 of the optical fibers are set therebetween. The slotted member 1 is pushed by the air cylinder 14a so as to move to place the glass portions 3 and 4 in the slot. The slotted member 1 is controlled to stop at the stopper 15a. As described referring to Figs. 9A and 9B, the slotted member is preferably stopped at a position where the slot pushes the glass portion 3 by a distance equal to the thickness of the cover.

The pushing member 2 is pushed by an air cylinder 14b and is restrained in its stop position by the stopper 15b. The pushing member 2 is supported by a movable shaft 2a while also being urged by the spring 2b which pushes the glass portions 3 and 4 of optical fibers together.

It is required of the pushing member 2 that it continues to push the optical fibers. If the pushing member 2 takes the form of an air slider, once the pushing member 2 is in contact with the optical fibers, the pushing member 2 continues to push the optical fibers even after the air supply is stopped. This not only saves air but also prevents any possible problems even if the pushing member yaws.

After the glass portions of optical fibers have been melted together, the clamp is opened. The movement of air cylinders 14a and 14b in opposite directions causes the tensile force caused by weights 22a and 22b to separate the slotted member 1 and the pushing member 2, so that the apparatus goes into drawing process.

The means for separating the slotted member 1 and the pushing member 2 is not limited to a weight. Other suitable drive mechanism such as air cylinder may also be used. The slotted member 1 and the pushing member 2 may be provided on a beveled surface so that the slotted member 1 and the pushing member are separated by allowing them to slide down along the beveled surface due to their weight.

When using a clamp according to the present invention, it is good practice to reduce the force for the pushing member to push the optical fibers so that damages to the optical fibers are prevented. From this point of view, the pushing member preferably has the form of an air floating type bearing. Of course, a mechanical slider may also be used.

The invention has been described with respect to an embodiment where the slotted member 1 is fixed and the pushing 2 is urged by a spring. Conversely, the pushing member 2 may be fixed at a position and the slotted member 1 may be urged by a spring. However, the former seems to be more reasonable. Both the members may be urged by springs but it is difficult to align the glass portions of two optical fibers in exact symmetry as opposed to a case where only one of the members is urged by a spring.

Fig. 18 shows a general construction of another embodiment of a clamp mechanism.

In the figure, elements similar to those in Fig. 17 have the same reference signs and their description has been omitted. Reference numeral 16a and 16b are automatic stages. In the embodiment, the slotted member 1 and the pushing member 2 are driven and positioned by the automatic stages. The positioning of the two members is critical in determining the characteristics of optical couplers. Thus, the use of automatic stages is advantageous in improving the accuracy of thus produced couplers.

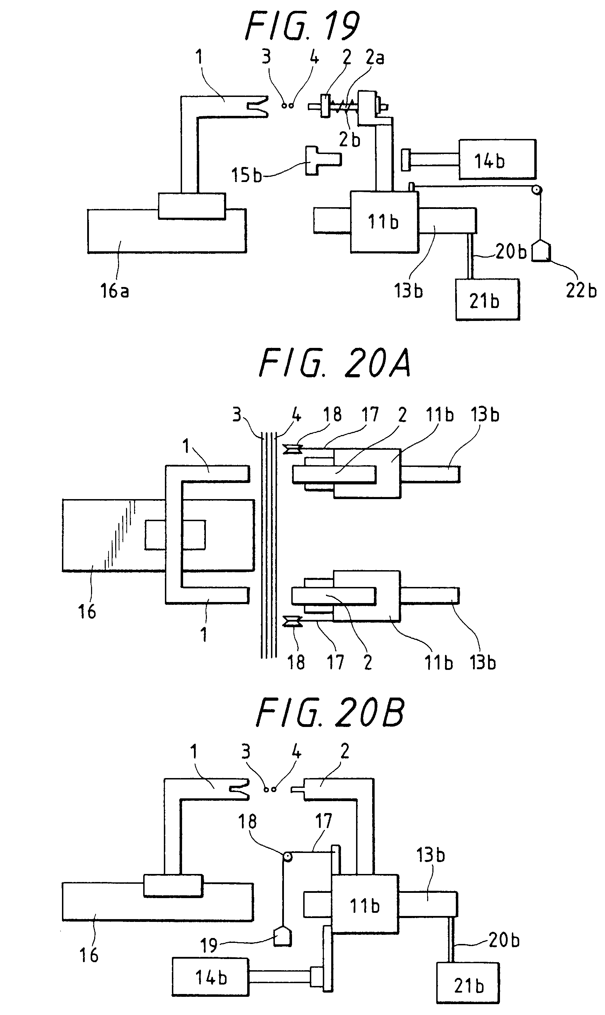

Fig. 19 shows a general construction of still another embodiment of a clamp mechanism. In the figure, elements similar to those in Fig. 17 have been given the same references and their description have been omitted. In this embodiment, the slotted member 1 is driven and positioned by the automatic stage 16a. The pushing member 2 is pushed by the air cylinder 14b as in Fig. 17, and is positioned by the stopper 15b.

Figs. 20A and 20B show general constructions of an embodiment where a weight is used in the clamp mechanism. Fig. 20A is a front view and Fig. 20B is a side view. In the figures, elements similar to those in Fig. 17 have the same reference signs and their description has been omitted. Reference numeral 17 denotes a string, 18 a roller, and 19 a weight. The slotted member 1 is driven by the automatic stage 16a. The weight 19 exerts a force on the slider 11b via the string 17 and the roller 18, thereby moving the pushing member 2. Prior to the movement of the pushing member 2 which is freely positioned relative to the slider 11b, the pressing force of the air cylinder against the slider 11b is removed. The glass portions 3 and 4 of optical fibers are pushed by the weight 19.

The method of moving the clamp is not limited to the above-described embodiments. Other suitable urging means such as an electromagnet may also be used. Known linear bearings may be used for the movable stage but other types of bearings may also be used if the moving mechanism have larger diameters.

The slotted member 1 and 1' may be spaced from the pushing members 2 and 2' axially of the optical fibers as shown in Fig. 14. In this case, larger shearing forces are exerted on the optical fibers so that the optical fibers tend to fracture. Thus, care should be exercised when applying a pressing force to the fibers.

Fig. 21 is a general perspective view of an optical fiber coupler manufacturing apparatus showing a further basic embodiment. In the figure, reference numeral 101 denotes a clamp first parts and 102 is clamp second parts. Elements similar to those in the preceding embodiments have the same reference signs, and their description has been omitted.

The two central clamps each includes a first clamp part 101 and a second clamp part 102, which have each a substantially L-shaped portion which clamp the glass portions 3 and 4 of optical fibers stripped their coatings off. The clamping operation will be described later in detail.

When manufacturing optical fiber couplers, two or more than two fibers with their coatings stripped off in part are clamped by the side clamps 9 on their corresponding drawing stage 10. The side clamps 9 are placed on the drawing stages 10 on which the optical fibers are drawn in the axial direction, and clamp the two fibers at their coatings 5 laterally. Then, the glass portions 3 and 4 are aligned in parallel by the two central clamps 101, 102 and are heated at the heat-fusing connecting portion 6 over the flame of burner 7.

Then, the first clamp parts 101 and the second clamp parts 102 move away from each other. Then, while being heated by the flame 8, the heat-fusing connected portion 6 is applied with a tensile force by the drawing stages 10 which carry the side clamps 9 that clamp the optical fiber coating 5. The heat-fusing connected portion 6 is drawn by the tensile force and the drawing operation is stopped when a desired split ratio is achieved. In this manner, optical fiber couplers are manufactured.

To put the glass portions together, for example, the first clamp parts 101 and/or the second clamp parts 102 are supported by the air slider so that the clamp parts are moved by a small force, and then the air supply is shut off to properly position the clamp.

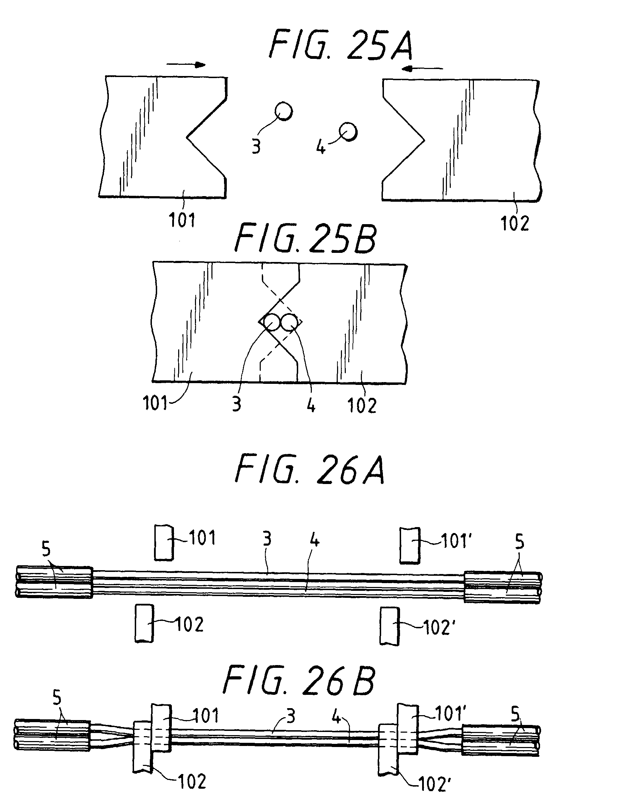

As shown in Figs. 26 to 28, it is preferred that the first and the second clamp parts 102 push the glass portions of optical fibers by the same amount. Either the first clamp parts 101 or the second clamp parts 102 should be urged by a small force such as a weight, or an electromagnet.

The first clamp parts 101 and the second clamp parts 102 are provided each side of the fibers so as to clamp the glass portions 3 and 4 by the both sides thereof. One or both of them may be supported by moving shafts independently of the other. In doing so, the glass portions may be pushed at both sides, respectively, so that the position of each clamp may be adjusted individually.

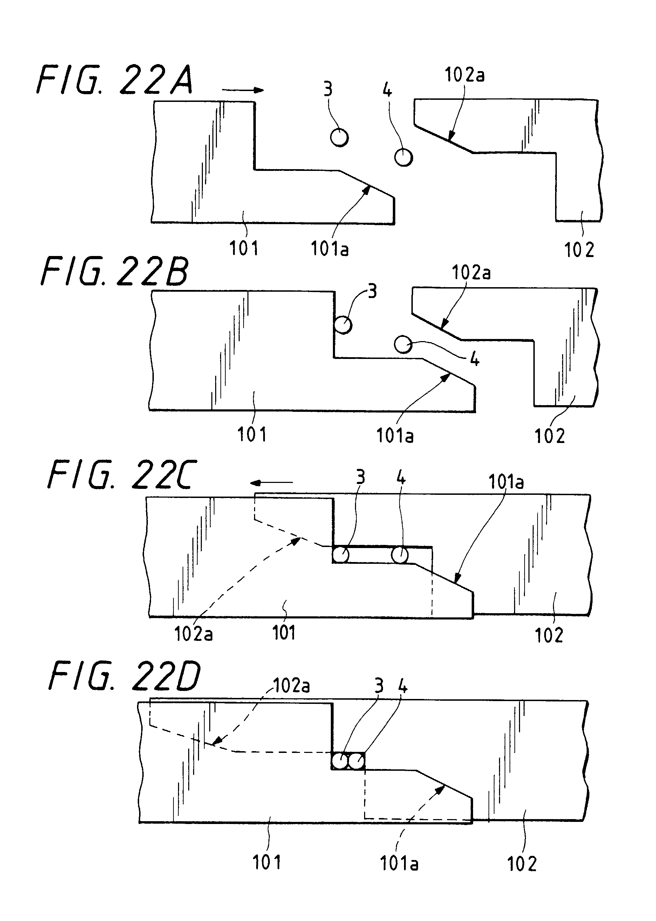

Figs. 22A to 22D are illustrative diagrams of the operation of an embodiment of a clamp for the optical fiber coupler manufacturing apparatus of Fig. 21. In the figure, reference numeral 101 is a first clamp part, 101a an optical fiber receiving portion, 102 a second clamp part, 102a an optical fiber receiving portion, and 3 and 4 glass portions of optical fibers. The first and second clamps parts 101 and 102 are substantially L-shaped, and in this embodiment, the first clamp parts clamps the glass portions from underside and left side thereof while the second clamp part from upper side and right side of the glass portions.

As shown in Fig. 22A, the glass portions 3 and 4 are positioned between the two spaced clamp parts. Firstly, the first clamp part 101 moves in the direction of the arrow. The glass portions 3 and 4 are guided into the L-shaped portion through the receiving portion 101a.

As shown in Fig. 22B, the first clamp part 101 stops at a predetermined position. This position is a position further advanced by a distance equal to the thickness of coating from the normal position of glass portions as described referring to Figs. 26 to 28.

As shown in Fig. 22C, the second clamp part 102 is advanced in the direction of the arrow. The glass portions 3 and 4 are guided downward by the receiving portion 102a and are aligned on the first clamp part 101.

The second clamp part 102 is further advanced so as to press the glass portions 3 and 4 as shown in Fig. 22D.

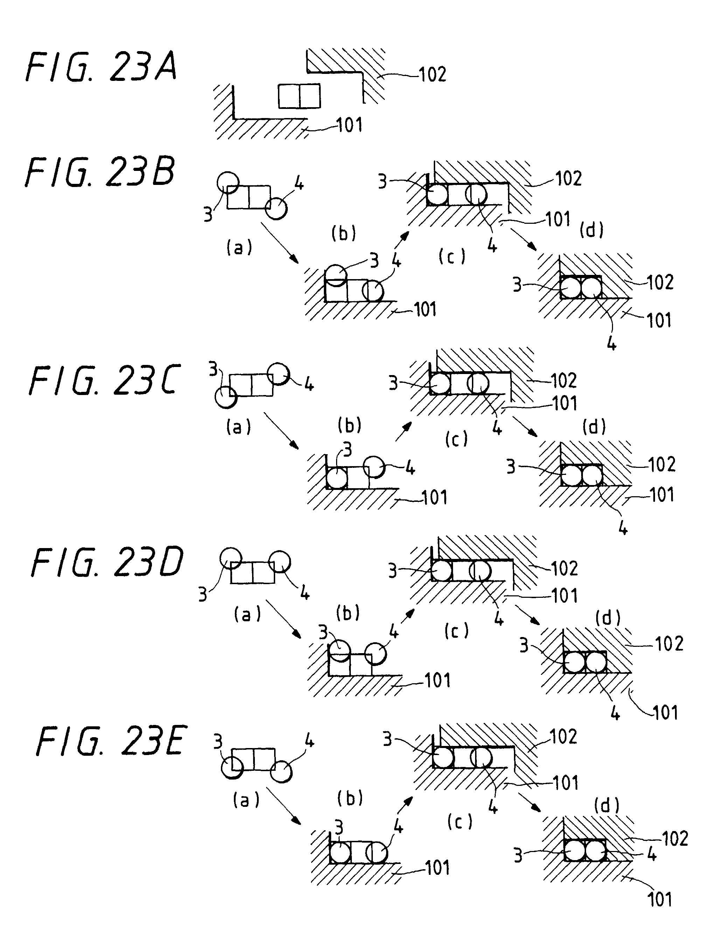

Figs. 23A to 23E are illustrative diagrams in which when clamping operation in Fig. 22 is performed, the glass portions 3 and 4 of optical fibers are positioned relative to the position where clamping operation is not performed. As shown in Fig. 23, two adjacent squares show the position where the glass portions are to be set. Reference numerals 101 and 102 indicate the walls of the first and second clamp parts. The clamp parts are of an L shape and thus the wall of first clamp part pushes the glass portions from left side and underside thereof while the wall of second clamp part acts on the glass portions 3 and 4 from the right side and the upper side. Figs. 23B to 23E show cases where the glass portions are positioned differently when not clamped. Figure (A) shows the positions of glass portions 3 and 4 when not clamped (i.e., Fig. 22A). Figure (B) the positions of glass portions in Fig. 22B, Figure (C) the position in Fig. 22C, and Figure (D) the position in Fig. 22D. it is apparent that the glass portions 3 and 4 are properly set in any of Figs. 23B to 23E.

Figs. 24A to 24C are illustrative diagrams of another embodiment of the clamp. In the figure, elements similar to those in Fig. 22 have the same reference signs and the description thereof is omitted. Fig. 24A shows the clamp when clamping operation is not effected and Fig. 24B when clamping operation is effected. As shown in Fig. 24C, when the diameter of glass portion of the optical fibers is 250 µm, the clearance $\underline{d}$ between the two clamp parts needs to be less than 62.5 µm, i.e., half of the radius of 125 µm. The clearance $\underline{d}$ is actually less than 30 µm allowing some margin. However, the first clamp part 101 and the second clamp part 102 should be axially spaced apart for the clamp in Fig. 22, while in this embodiment, the first clamp 101 and the second clamp 102 can be positioned at the same position longitudinally of the glass portions 3 and 4 so that no shearing force is exerted on the glass portions.

Figs. 25A and 25B show an embodiment where the L-shaped portion is rotated by 45 degrees. Fig. 25A shows the clamp when not clamping and Fig. 25B when clamping. In the embodiment, the aperture of the clamp may wide open. Thus, unlike the clamp disclosed in Japanese Patent Preliminary Publication No. 64-80913, the glass portions need not to be carefully inserted into the slot but are pushed from both sides by the two L-shaped clamp parts 101 and 102 for secure alignment of the two fibers.

Figs. 26 to 28 are top views showing the positions of the clamp when clamped and not clamped, described referring to Figs. 22, 24 and 29. In the figure, reference numerals 101 and 101' denote the first clamp parts, 102 and 102' the second clamp parts, 3 and 4 the glass portions of optical fibers, and 5 and 5' coatings.

Figs. 26A and 26B show an embodiment where the first clamp parts 101 and 101' are spaced apart relative to the second clamp parts 102 and 102' in the longitudinal direction of the glass portions 3 and 4. Before clamping, as shown in Fig. 26A, the first clamp parts 101 and 101' and the second clamp parts 102 and 102' are spaced apart. Prior to the fusing process, the first clamp parts 101 and 101' and the second clamp parts 102 and 102' move to clamp the glass portions 3 and 4 of optical fibers. In this case, as shown in Fig. 26B, the glass portions 3 and 4 of the two optical fibers are clamped symmetrically. Thus, it is important that the first clamp parts 101 and 101' and the second clamp parts 102 and 102' push the glass portions 3 and 4 by a distance equal to the thickness of the coating of optical fibers. Care should be exercised so that the clamp parts are properly positioned and properly push the fibers.

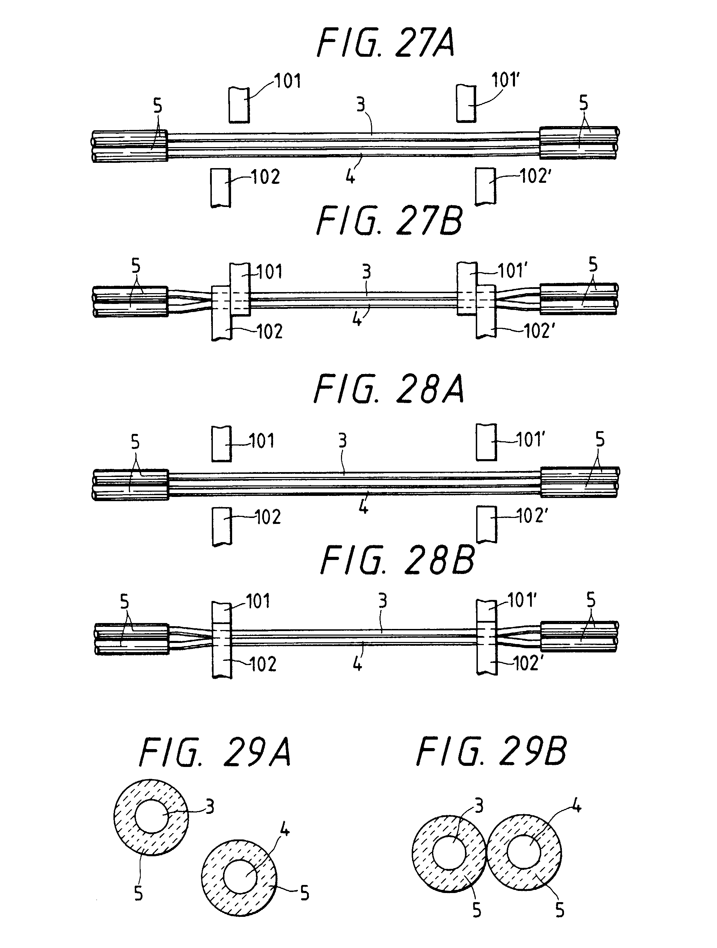

Ideally or theoretically, the glass portions 3 and 4 are supposed to be as shown in Fig. 29B if the two optical fibers are properly aligned by the side clamps 9 described referring to Fig. 21. Due to forces resulted from twisting and bending of the optical fibers themselves, the coating 5 cannot be put together by the side clamps 9 in an ideal form, the two optical fibers actually being away from each other and at irregular positions as shown in Fig. 29A. In the present invention, the two L-shaped portions 101 and 102 push the fibers from both sides so that the two fibers are reliably put together.

Figs. 27A and 27B show an embodiment where the first clamp parts 101 and 101' and the second clamp parts 102 and 102' are spaced apart in opposite longitudinal directions of the glass portions 3 and 4. That is, the first clamp parts 101 and 101' are inside while the second clamp parts 102 and 102' are outside. Fig. 27A shows the clamps when not clamping while Fig. 27B when clamping. By arranging this way, clamping may also be effected just as in Fig. 26. Conversely, the first clamp parts 101 and 101' may be outside and the second clamp parts 102 and 102' inside.

Figs. 28A and 28B show an embodiment where the first clamp parts 101 and 101' and the second clamp parts 102 and 102' are at the same level in the axial direction of the glass portions 3 and 4. Fig. 28A shows the clamps when not clamping and Fig. 28B shows when clamping. In this embodiment, the clamp described with reference to Fig. 24 is used.

With these embodiments, it is critical that the glass portions 3 and 4 of the optical fibers are set vertically symmetrical as shown in Figs. 26 to 28. Thus, it is important that the first clamp parts 101 and 101' and the second clamp parts 102 and 102' push the optical fibers by a distance equal to the thickness of coatings 5. Thus, the clamp parts are so set.

The first clamp parts 101 and 101' and the second clamp parts 102 and 102' push the glass portions 3 and 4 of optical fibers by means of a stable urging force such as a compressive spring, tensile force of a weight, or electromagnet.

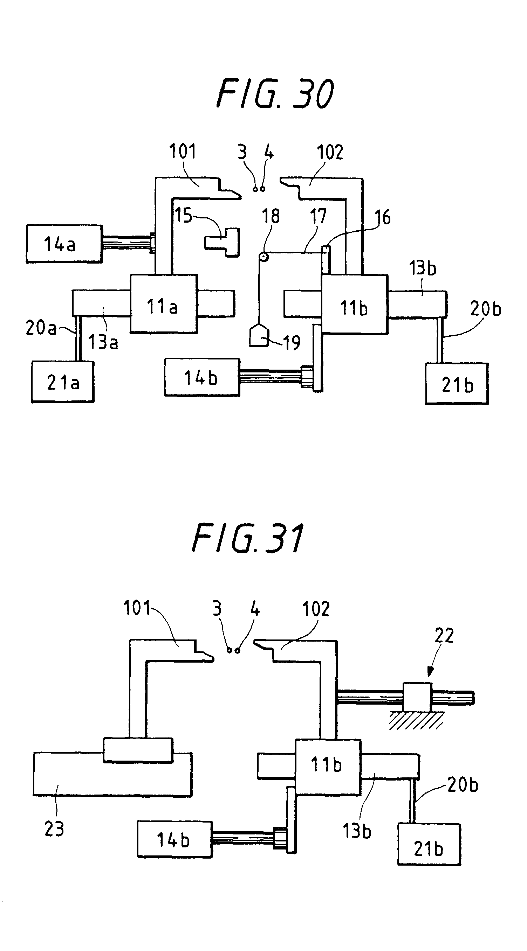

Fig. 30 shows a general construction of a clamp mechanism used in an optical fiber coupler manufacturing apparatus and illustrates an embodiment where an air cylinder is used on one side and a weight is used on the other side for driving the clamp. In the figure, reference numerals 101 is a first clamp, 102 and a second clamp, 3 and 4 glass portions of optical fibers, 11a and 11b sliders, 13a and 13b guide shafts, 14a and 14b air cylinders, 15 a stopper, 16 fixing post for a string, 17 a string, 18 a roller, 19 a weight, 20a and 20b air supplying tubes, and 21a and 21b compressed air suppliers. The sliders 11a and 11b take the form of an air slider.

The operation of the clamp mechanism in Fig. 30 will now be described. When not clamping, as shown, the first clamp 101 and the second clamp 102 are spaced apart so as to receive the glass portions 3 and 4 of optical fibers. The first clamp 101 is pushed by the air cylinder 14a to move, placing the glass portions 3 and 4 at the horizontal portion of L-shaped. The movement of first clamp 101 is controlled to stop by the stopper 15. The weight 19 applies a force to the post 16 via the roller 18 and the string 17 to move the second clamp 102. Prior to movement, the slider 11b is freed from the pressing force of air cylinder 14b.

When using a clamp according to the present invention, the pressing force of the second clamp may be preferably reduced so that the optical fibers are not damaged. From this point of view, the second clamp may be best supported by an air floating type bearing using an air slider. One example of an air slider is shown in Fig. 13.

Fig. 31 shows a general construction of another embodiment of a clamp mechanism for an optical fiber coupler manufacturing apparatus.

In the figure, elements similar to those in fig. 30 have the same reference signs and their description has been omitted. Reference numeral 22 denotes a magnet mechanism in the form of an electromagnet, and 23 is an automatic stage. The first clamp 101 plays an important role in positioning, this, an automatic stage 23 is used. The second clamp 102 may be driven by a magnet mechanism 22.

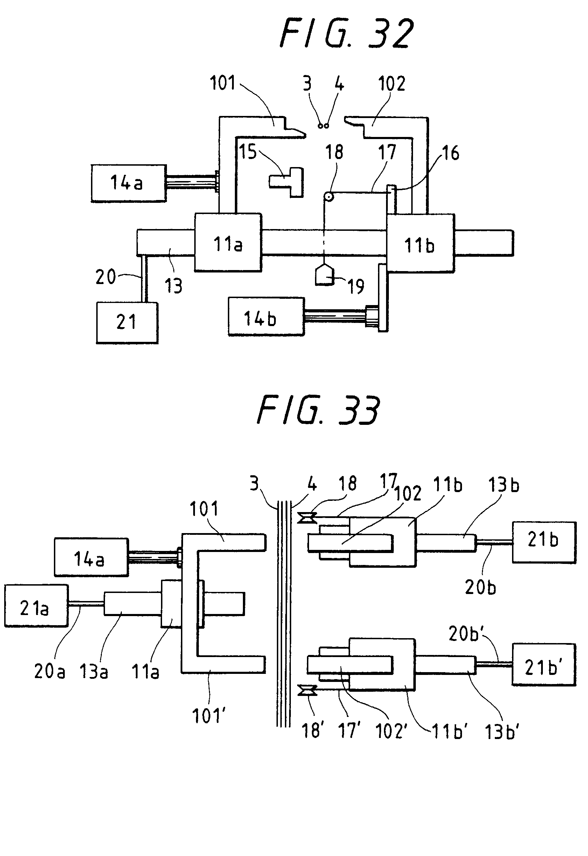

Fig. 32 shows a general construction of still another embodiment of a clamp mechanism for an optical fiber coupler manufacturing apparatus. In the figure, elements similar to those in Fig. 30 have the same reference signs and their description has been omitted. In this embodiment, the two guide shafts 13a and 13b have been replaced by a common guide shaft 13. This facilitates the positioning of the first clamp 101 relative to the second clamp 102.

Fig. 33 shows a still another embodiment of clamp driving mechanism and illustrates a general construction of a clamp mechanism used in an optical fiber coupler manufacturing apparatus. In the figure, elements similar to those in Fig. 30 have the same reference numerals and their description has been omitted. Fig. 33 is a top view, thus showing dual parts for the first clamps and the second clamps. One of dual parts is shown with the same reference numerals as in Fig. 30 and the other with "'". In this embodiment, the second clamps 102 and 102' are guided by independent guide shafts. The second clamps 102 and 102' are pushed independently of the other, so that the position of the tip end thereof may be adjusted individually.

The first clamps 101 and 101' may have individual guide shafts, respectively. The respective guide shafts may be constructed for both clamps. However, only one guide shaft may be provided.

The method of moving the clamps is not limited to the above-described embodiment, and known linear bearings may be used. If the moving mechanism has a larger diameter, then the bearings need not be a linear bearing.

The results of an experiment performed using the mechanism in Fig. 30 will now be described below. Comparison is made with the clamp mechanism in Fig. 3. A trial production was tested for an optical fiber in which single mode optical fibers for 1.3 μm band having a clad diameter of 125±1.5 μm, an MFD of 9.5±1 μm, and a cut-off wavelength of 1.2 μm, are formed into a 0.25 mm diameter optical fiber using ultraviolet-curing resin.

An LD light source having a wavelength of 1.3 μm was introduced into one ends of the fibers and the light through the respective fibers was monitored, wherein the split ratio of the fibers was estimated by detecting the light with a power meter while the fibers were being drawn. When the split ratio reached 50% of the original value, the burner was moved away from the fibers. Optical fiber couplers were made with a target split ratio of 50±3% so as to evaluate excess loss thereof. The covers were stripped off the fibers to expose the glass portion of about 30 mm and an acetylene oxygen burner was used. Fusing was effected as follows: That is, the optical fibers were heated for five minutes to a temperature of 1400°C measured with a radiation thermometer, and a weight of three grams is used to give a tensile force on the fibers.

The 30 conventional couplers were tested in comparison with the couplers manufactured with an apparatus according to the invention. The conventional couplers showed an average excess loss of 0.29 dB and a maximum excess loss of 0.6 dB while the couplers made with an embodied apparatus showed an average excess loss of 0.18 dB and a maximum excess loss of 0.46 dB. The latter showed better results.

As is apparent from the above description, according to a clamp for optical fibers of the invention, the optical fibers may be aligned each time the fibers are fused during the manufacturing stage of optical fiber couplers. This makes it possible to manufacture optical fiber couplers with good reproducibility.

As is clear from the experimental results, manufactured optical fiber couplers have small variation in excess loss, being advantageous in improving yield.

Further, the clamp may be automatically opened and closed, being effective in saving manpower.

Similarly, in other embodiments mentioned above, the same experiment results could be obtained.

## Claims

1. Apparatus for clamping optical fibers (3,4) in contact side by side in a common plane at at least one given clamping location so as to enable their fixing together in the vicinity of said at least one clamping location, said apparatus comprising:

at least a first pair of a first and a second movable members (1,2) having confronting portions between which the optical fibres to be clamped are to be longitudinally disposed; and
moving means (11) for moving at least one of said two movable members towards the other to effect clamping of said fibers longitudinally disposed therebetween and for then separating said two members from each other after said thus clamped fibers have been fixed together, characterised in that
said confronting portion of said first movable member (1) is provided with a longitudinally extending Y-shaped cross-sectional slot (1a,1b) comprising a V-shaped cross-sectional guide opening (1b) for facilitating the gathering of the fibers longitudinally disposed in the vicinity thereof, and a narrow recess (1a) terminating the apex of the V-shaped cross-sectional guide opening for receiving the thus gathered fibers stacked one upon the other along the height of said narrow recess; said confronting portion being further provided with a transversally extending slot (1c) arranged so as to divide said V-shaped cross-sectional guide opening in two longitudinally separated V-shaped cross-sectional guide opening portions (1b), whilst leaving the narrow recess (1a) continuous in the longitudinal direction, and
said confronting portion of said second movable member (2) is arranged as a pushing portion, receivable in said transversally extending slot (1c) of said first member (1) between said two longitudinally separated V-shaped guide opening portions (1b) thereof, for pushing said interposed longitudinally extending optical fibers through said guide opening portions (1b) into said longitudinally extending continuous narrow recess (1a) and for clamping them side by side along the height of said recess.

2. An apparatus as claimed in claim 1, further comprising a second pair of a first and a second movable members (1,2), longitudinally spaced from said first pair, so as to enable the fixing together of the fibers longitudinally extending between the respective first and second members of said first and second pairs at an intermediate location between the two longitudinally spaced clamping locations thus defined by said two longitudinally spaced pairs.

3. An apparatus as claimed in claim 2, wherein said moving means (11) is arranged so as to simultaneously operate both pairs of first and second movable members (1,2).

4. An apparatus as claimed in claims 1 or 3, wherein said moving means comprises air slider means (11) and air supply means (20) for supplying air to said air slider means (11).

5. An apparatus as claimed in claim 4, wherein said air slider means (11) positions at least one of said first and second movable members (1,2) when said air supply means (20) suspends air supply to said air slider means (11).

6. An apparatus as claimed in claim 4, wherein said moving means comprises a common guide shaft (13) for moving both of said first and second movable members (1,2).

7. An apparatus as claimed in claims 1, 3, 4, 5 or 6 wherein said first movable member (1) and said pushing element (2) are adapted to push said optical fibres by a distance equal to a thickness of a coating of said optical fibres (3,4).

8. An apparatus as claimed in claim 1, wherein said moving means includes one of a weight (22b) and an electromagnet (14b) for moving said pushing element (2).

9. An apparatus as claimed in claim 1, 3 or 8 further comprising spring means (2a,2b) for urging said pushing elements (2) towards said first movable member (1) at all times.

10. An apparatus as claimed in claim 9, wherein said spring means comprises a spring (2b) independently provided for each pushing element.

11. A method of clamping optical fibres (3,4) in contact side by side in a common plane using the apparatus as claimed in claim 1 or 3, said method comprising the steps of:

moving said first movable member(s) (1) closer to said pushing portion of said second movable member(s) (2) to collect and receive said optical fibres in said longitudinally separated V-shaped guide opening portions (1b) of said first movable members(s) (1); and

pushing said optical fibres (3,4) into said longitudinally extending narrow recess (1a) of said first movable member(s) (1) with said pushing portion of said second movable member(s) (2).

12. A method according to claim 11, wherein said pushing step comprises inserting said pushing portion of said second movable member(s) into said transversally extending slot (1c) of said first movable member(s) (1).

**Patentansprüche**

1. Vorrichtung zum Einklemmen optischer Fasern (3, 4) in seitlicher Berührung in einer gemeinsamen Ebene an zumindest einem vorgegebenen Klemmort, um ihre Befestigung aneinander in der Nachbarschaft des genannten zumindest einen Klemmort zu ermöglichen, wobei die genannte Vorrichtung umfaßt:

zumindest ein erstes Paar aus einem ersten und einem zweiten, bewegbaren Teil (1, 2), das gegenüberstehende Abschnitte aufweist, zwischen denen die einzuklemmenden optischen Fasern in Längsrichtung anzuordnen sind; und

eine Bewegungseinrichtung (11), um zumindest eines der genannten zwei bewegbaren Teile zu dem anderen zu bewegen, um das Einklemmen der genannten dazwischen in Längsrichtung angeordneten Fasern auszuführen, und dann die genannten zwei Teile voneinander zu trennen, nachdem die derart eingeklemmten Fasern aneinander befestigt worden sind, **dadurch gekennzeichnet,** daß

der genannte gegenüberstehende Abschnitt des genannten ersten bewegbaren Teils (1) mit einem sich in Längsrichtung erstreckenden, im Querschnitt Y-förmigen Schlitz (1a, 1b) versehen ist, der eine im Querschnitt V-förmige Führungsöffnung (1b) umfaßt, um das Sammeln der in der Nähe davon in Längsrichtung angeordneten Fasern zu erleichtern, und eine schmale Ausnehmung (1a), die den Scheitel der im Querschnitt V-förmigen Führungsöffnung beendet, um die derart gesammelten Fasern aufzunehmen, die übereinander entlang der Höhe der genannten schmalen Ausnehmung gestapelt sind, wobei der genannte gegenüberstehende Abschnitt des weiteren mit einem sich quer erstreckenden Schlitz (1c) versehen ist, der so angeordnet ist, daß er die genannte im Querschnitt V-förmige Führungsöffnung in zwei in Längsrichtung getrennte, im Querschnitt V-förmige Führungsöffnungsabschnitte (1b) unterteilt, während die schmale Ausnehmung (1a) in der Längsrichtung durchgehend gelassen wird, und

der genannte gegenüberstehende Abschnitt des genannten zweiten, bewegbaren Teils (2) als ein Drückabschnitt angeordnet ist, der in dem genannten sich quer erstreckenden Schlitz (1c) des genannten ersten Teils (1) zwischen dessen genannten zwei, in Längsrichtung getrennten, V-förmigen Führungsöffnungsabschnitten (1b) aufnehmbar ist, um die genannten zwischengefügten, sich in Längsrichtung erstreckenden, optischen Fasern durch die genannten Führungsöffnungsabschnitte (1b) hindurch in die genannte sich in Längsrichtung erstrekkende, durchgehende, schmale Ausnehmung (1a) zu drücken und sie nebeneinander entlang der Höhe der genannten Ausnehmung einzuklemmen.

2. Eine Vorrichtung, wie in Anspruch 1 beansprucht, die des weiteren ein zweites Paar aus einem ersten und einem zweiten, bewegbaren Teil (1, 2) umfaßt, das in Längsrichtung von dem genannten ersten Paar beabstandet ist, um zu ermöglichen, die sich in Längsrichtung zwischen dem entsprechenden ersten und zweiten Teil des genannten ersten und zweiten Paars erstreckenden Fasern an einem Zwischenort zwischen den zwei, in Längsrichtung beabstandeten Einklemmorten festzulegen, die durch die genannten zwei, in Längsrichtung beabstandeten Paare definiert sind.

3. Eine Vorrichtung, wie in Anspruch 2 beansprucht, wobei die genannte Bewegungseinrichtung (11) so angeordnet ist, daß sie gleichzeitig beide Paare aus erstem und zweitem, bewegbaren Teil (1, 2) betätigt.

4. Eine Vorrichtung, wie in Anspruch 1 oder 3 beansprucht, wobei die genannte Bewegungseinrichtung eine Luftverschiebeeinrichtung (11) und eine Luftzuführeinrichtung (20) umfaßt, um der genannten Luftverschiebeeinrichtung (11) Luft zuzuführen.

5. Eine Vorrichtung, wie in Anspruch 4 beansprucht, wobei die genannte Luftverschiebeeinrichtung (11) zumindest eines des genannten ersten und zweiten, bewegbaren Teils (1, 2) positioniert, wenn die genannte Luftzuführeinrichtung (20) der genannten Luftverschiebeeinrichtung (11) eine Luftzufuhr liefert.

6. Eine Vorrichtung, wie in Anspruch 4 beansprucht, wobei die genannte Bewegungseinrichtung einen gemeinsamen Führungsschaft (13) umfaßt, um das genannte erste und das genannte zweite bewegbare Teil (1, 2) beide zu bewegen.

7. Eine Vorrichtung, wie in Anspruch 1, 3, 4, 5 oder 6 beansprucht, wobei das genannte erste, bewegbare Teil (1) und das genannte Drückteil (2) ausgebildet sind, die genannten optischen Fasern über eine Strecke zu drücken, die gleich der Dicke einer Beschichtung der genannten optischen Fasern (3, 4) ist.

8. Eine Vorrichtung, wie in Anspruch 1 beansprucht, wobei die genannte Bewegungseinrichtung ein Gewicht (22b) oder einen Elektromagneten (14b) zur Bewegung des genannten Drückelements (2) einschließt.

9. Eine Vorrichtung, wie in Anspruch 1, 3 oder 8 beansprucht, die des weiteren eine Federeinrichtung (2a, 2b) umfaßt, um die genannten Drückelemente (2) in Richtung zu dem genannten ersten, bewegbaren Teil (1) während der ganzen Zeit zu drücken.

10. Eine Vorrichtung, wie in Anspruch 9 beansprucht, wobei die genannte Federeinrichtung eine Feder (2b) umfaßt, die unabhängig für jedes Drückelement vorgesehen ist.

11. Ein Verfahren zum Einklemmen optischer Fasern in seitlicher Berührung in einer gemeinsamen Ebene (3, 4), wobei die in Anspruch 1 oder 3 beanspruchte Vorrichtung verwendet wird, und das genannte Verfahren die Schritte umfaßt:

Bewegen des/der genannten ersten, bewegbaren Teils/Teile (1) näher zu dem genannten Drückabschnitt des/der genannten zweiten, bewegbaren Teils/Teile (2), um die genannten optischen Fasern in den genannten in Längsrichtung getrennten V-förmigen Führungsöffnungsabschnitten (1b) des/der genannten ersten, bewegbaren Teils/Teile (1) zu sammeln und aufzunehmen;

Drücken der genannten optischen Fasern (3, 4) in die genannte sich in Längsrichtung erstrekkende, schmale Ausnehmung (1a) des/der genannten ersten bewegbaren Teils/Teile (1) mit dem genannten Drückabschnitt des/der genannten zweiten bewegbaren Teils/Teile (2).

12. Ein Verfahren gemäß Anspruch 11, wobei der genannte Drückschritt umfaßt, den genannten Drückabschnitt des/der genannten zweiten, bewegbaren Teils/Teile in den genannten sich quer erstreckenden Schlitz (1c) zu drücken.

**Revendications**

1. Appareil pour bloquer des fibres optiques (3, 4) en contact côte à côte dans un plan commun sur au moins un emplacement de blocage donné afin de permettre leur fixation ensemble au voisinage dudit au moins un emplacement de blocage, ledit appareil comprenant :

au moins une première paire des premier et second éléments mobiles (1, 2) ayant des parties en confrontation entre lesquels les fibres optiques à bloquer sont à disposer longitudinalement ;

un moyen de déplacement (11) pour déplacer au moins un desdits deux éléments mobiles vers l'autre pour effectuer le blocage desdites fibres disposées longitudinalement entre eux et pour alors séparer les deux éléments l'un de l'autre après avoir fixé ensemble ainsi lesdites fibres bloquées, caractérisé en ce que

ladite partie de confrontation dudit premier élément mobile (1) est pourvue d'une fente en coupe transversale en forme de Y s'étendant longitudinalement (1a, 1b) comprenant une ouverture de guidage en coupe transversale en forme de V (1b) pour faciliter le rassemblement des fibres disposées longitudinalement au voisinage de celles-ci, et une cavité étroite (la) terminant le sommet de l'ouverture de guidage en coupe transversale en forme de V pour recevoir les fibres ainsi rassemblées empilées l'une sur l'autre le long de la hauteur de ladite cavité étroite ; ladite partie de confrontation étant en outre pourvue d'une fente s'étendant transversalement (1c) disposée afin de diviser l'ouverture de guidage en coupe transversale en forme de V dans deux parties d'ouverture de guidage en coupe transversale en forme de V séparées longitudinalement (1b), tout en laissant la cavité étroite (1a) continue dans la direction longitudinale, et

ladite partie de confrontation dudit second élément mobile (2) est disposée comme une partie de poussée, recevable dans ladite fente s'étendant transversalement (1c) dudit premier élément (1) entre lesdites deux parties d'ouverture de guidage en forme de V séparées longitudinalement (1b) de celles-ci, pour pousser lesdites fibres optiques s'étendant longitudinalement interposées à travers lesdites parties d'ouverture de guidage (1b) dans ladite cavité étroite continue s'étendant longitudinalement (1a) et pour les bloquer côte à côte le long de la hauteur de ladite cavité.

2. Appareil selon la revendication 1, comprenant en outre une seconde paire des premier et second éléments mobiles (1, 2) espacés longitudinalement à partir de la première paire, afin de permettre la fixation ensemble des fibres s'étendant longitudinalement entre les premier et second éléments respectifs desdites première et seconde paires à des emplacements intermédiaires entre les deux emplacements de blocage espacés longitudinalement ainsi définis par lesdites deux paires espacées longitudinalement.

3. Appareil selon la revendication 2, dans lequel ledit moyen de déplacement (11) est disposé afin de faire fonctionner simultanément les deux paires des premier et second éléments mobiles (1, 2).

4. Appareil selon la revendication 1 ou 3, dans lequel ledit moyen de déplacement comprend un moyen d'élément de coulissement d'air (11) et un moyen d'alimentation d'air (20) pour fournir de l'air audit moyen d'élément de coulissement d'air (11).

5. Appareil selon la revendication 4, dans lequel ledit moyen d'élément de coulissement d'air (11) positionne au moins un desdits premier et second éléments mobiles (1, 2) lorsque ledit moyen d'alimentation d'air (20) suspend l'alimentation d'air audit moyen d'élément de coulissement d'air (11).

6. Appareil selon la revendication 4, dans lequel ledit moyen de déplacement comprend un arbre de guidage commun (13) pour déplacer les deux desdits premier et second éléments mobiles (1, 2).

7. Appareil selon les revendications 1, 3, 4, 5 ou 6 dans lequel ledit premier élément mobile (1) et ledit élément de poussée (2) sont adaptés pour pousser lesdites fibres optiques d'une distance égale à une épaisseur d'une gaine desdites fibres optiques (3, 4).

8. Appareil selon la revendication 1, dans lequel ledit moyen de déplacement comprend un d'un poids (22b) et d'un électroaimant (14b) pour déplacer ledit élément de poussée (2).

9. Appareil selon la revendication 1, 3 ou 8 comprenant en outre un moyen de ressort (2a, 2b) pour pousser lesdits éléments de poussée (2) vers ledit premier élément mobile (1) tout le temps.

10. Appareil selon la revendication 9, dans lequel ledit moyen de ressort comprend un ressort (2b) fourni indépendamment pour chaque élément de poussée.

11. Procédé de blocage des fibres optiques (3, 4) en contact côte à côte dans un plan commun en utilisant l'appareil selon les revendications 1 ou 3, comprenant les étapes de :

déplacement dudit (desdits) premier(s) élément(s) mobile(s) (1) plus proche(s) de ladite partie de poussée dudit (desdits) second(s) élément(s) mobile(s) (2) pour rassembler et recevoir lesdites fibres optiques dans lesdites parties d'ouverture de guidage en forme de V séparées longitudinalement (1b) dudit (desdits) premier(s) élément(s) mobile(s) (1) ; et

poussée desdites fibres optiques (3, 4) dans ladite cavité étroite s'étendant longitudinalement (la) dudit (desdits) premier(s) élément(s) mobile(s) (1) avec ladite partie de poussée dudit (desdits) second(s) élément(s) mobile(s) (2).

12. Procédé selon la revendication 11, dans lequel ladite étape de poussée comprend l'insertion de ladite partie de poussée dudit (desdits) second(s) élément(s) mobile(s) dans ladite fente s'étendant transversalement (1c) dudit (desdits) premier(s) élément(s) mobile(s) (1).

## FIG. 1

## FIG. 2

## FIG. 3

FIG. 4A

FIG. 4B

3  4

3  4

FIG. 4C

FIG. 4D

3  4

3  4

FIG. 5A

FIG. 5B

M

3

4

M

L

2r

FIG. 5C

$D = 2(1 + \sqrt{2})r$

r

# FIG. 6

# FIG. 7A

# FIG. 7B

# FIG. 7C

# FIG. 8A

# FIG. 8B

# FIG. 8C

# FIG. 8D

# FIG. 8E

# FIG. 9A

# FIG. 9B

# FIG. 10A

# FIG. 10B

# FIG. 11

## FIG. 12A

## FIG. 12B

EP 0 496 402 B1

*FIG. 13*

*FIG. 14*

*FIG. 15*

21

## FIG. 16A

2(2')      1(1')

4    3

## FIG. 16B

2(2')      1(1')

4    3

## FIG. 17

1   3   4   2   2a

14a    15a    2b    14b

15b

20a   11a    11b   20b

22a   21a   13a    13b   21b   22b

## FIG. 18

1   3   4   2   2a

2b

16a      16b

## FIG. 19

## FIG. 20A

## FIG. 20B

*FIG. 21*

*FIG. 24A*

*FIG. 24B*

*FIG. 24C*

FIG. 22A

FIG. 22B

FIG. 22C

FIG. 22D

FIG. 23A

FIG. 23B

FIG. 23C

FIG. 23D

FIG. 23E

## FIG. 25A

101    102

## FIG. 25B

101    3    4    102

## FIG. 26A

5    101    3    4    101'    5
102    102'

## FIG. 26B

5    101    3    4    101'    5
102    102'

## FIG. 27A

## FIG. 27B

## FIG. 28A

## FIG. 28B

## FIG. 29A

## FIG. 29B

# FIG. 30

# FIG. 31

# FIG. 32

# FIG. 33